# EUROPEAN PATENT APPLICATION

(11) **EP 2 600 598 A1**
(43) Date of publication of application: **05.06.2013**
(21) Application number: 12193765.0
(22) Date of filing: 22.11.2012
(51) Int. Cl.: H04M 3/493, G06Q 10/06

(54) **Verified time collection in aircraft assembly**

(30) Priority: 02.12.2011 US 201113310499
(71) Applicant: The Boeing Company, Chicago, IL 60606-2016 (US)
(72) Inventor: Dupler, Craig E., Seattle, WA Washington 98124-2207 (US); Loubier, Whitney M, Seattle, WA Washington 98124-2207 (US)
(74) Representative: Witte, Weller & Partner

(57) **Abstract**

A system, method, and apparatus for point of use verified aircraft assembly time collection are disclosed herein. The disclosed method for manufacturing process control involves assigning a plurality of manufacturing tasks to an interactive voice response (IVR) menu associated with a manufacturing process control application. The method further involves selecting one of the plurality of manufacturing tasks assigned to the interactive voice response menu via a mobile telephone device of the user. In addition, the method involves receiving a confirmation response on the mobile telephone device from the manufacturing process control application indicating the manufacturing task selected. In one or more embodiments, the assigning of the plurality of manufacturing tasks involves assigning each manufacturing task to a number. In some embodiments, the number corresponds to a key on the keypad of the mobile telephone device.

## Description

### BACKGROUND

The present disclosure relates to aircraft assembly time collection. In particular, it relates to point of use verified aircraft assembly time collection. Currently, the processes available for activation/termination of aircraft assembly manufacturing tasks are quite cumbersome. The methods and apparatus disclosed herein provide an operative system for point of use verified aircraft assembly time collection.

### SUMMARY

The present disclosure relates to a method, system, and apparatus for point of use verified aircraft assembly time collection. According to an aspect of the present invention there is provided a method for manufacturing process control. In particular, the method involves assigning a plurality of manufacturing tasks to an interactive voice response (IVR) menu associated with a manufacturing process control application. The method further involves selecting one of the plurality of manufacturing tasks assigned to the interactive voice response menu via a mobile telephone device of a user. Also, the method involves receiving a confirmation response on the mobile telephone device from the manufacturing process control application indicating the manufacturing task selected.

Advantageously, the assigning of the plurality of manufacturing tasks involves assigning each manufacturing task to a number. Preferably, the number corresponds to a key on the keypad of the mobile telephone device

Advantageously,, the selecting of one of the plurality of manufacturing tasks comprises sending a text message to the interactive voice response menu indicating the manufacturing task to be selected. Advantageously, the selecting of one of the plurality of manufacturing tasks comprises orally reciting a menu item to the interactive voice response menu indicating the manufacturing task to be selected by the user. Advantageously, the selecting of one of the plurality of manufacturing tasks results in termination of a previous manufacturing task and activation of the selected manufacturing task. Advantageously, the receiving of a confirmation response on the mobile telephone comprises receiving information associated with the terminated previous manufacturing task. Preferably, the receiving of a confirmation response on the mobile telephone device comprises receiving information associated with the selected manufacturing task. Advantageously, the authenticating of the user of the mobile telephone device occurs prior to the selecting of one of the plurality of manufacturing tasks. Preferably, the authenticating of the user comprises verifying the telephone number corresponding to the user's mobile telephone device. Preferably, the authenticating of the user comprises verifying a personal identification number (PIN) entered by the user that is associated with the telephone number corresponding to the user's mobile telephone device. Advantageously, the receiving of the confirmation response comprises receiving a text message on the mobile telephone device.

According to a further aspect of the present invention there is provided, a system for manufacturing process control. The disclosed system involves an interactive voice response (IVR) menu associated with a manufacturing process control application, and a mobile telephone device of a user. For the system, a plurality of manufacturing tasks are assigned to the interactive voice response (IVR) menu associated with the manufacturing process control application. Also, one of the plurality of manufacturing tasks assigned to the interactive voice response menu is selected via a mobile telephone device of a user. In addition, a confirmation response is received on the mobile telephone device from the manufacturing process control application indicating the manufacturing task selected.

Advantageously, assigning the plurality of manufacturing tasks involves assigning each manufacturing task to a number. Preferably, the number corresponds to a key on a keypad of the mobile telephone device. Advantageously, selecting one of the plurality of manufacturing tasks comprises sending a text message to the interactive voice response menu indicating the manufacturing task to be selected. Advantageously, selecting one of the plurality of manufacturing tasks comprises orally reciting a menu item to the interactive voice response menu indicating the manufacturing task to be selected by the user. Advantageously, selecting one of the plurality of manufacturing tasks results in termination of a previous manufacturing task and activation of the selected manufacturing task. Preferably, receiving a confirmation response on the mobile telephone comprises receiving information associated with the terminated previous manufacturing task. Advantageously, receiving a confirmation response on the mobile telephone device comprises receiving information associated with the selected manufacturing task. Advantageously, receiving the confirmation response comprises receiving a text message on the mobile telephone device.

The features, functions, and advantages can be achieved independently in various embodiments of the present inventions or may be combined in yet other embodiments.

### DRAWINGS

These and other features, aspects, and advantages of the present disclosure will become better understood with regard to the following description, appended claims, and accompanying drawings where:
FIG. 1 illustrates a schematic diagram of a manufacturing process control system.
FIG. 2 illustrates a flow diagram of a method of manufacturing control according to some embodiments.
FIG. 3A illustrates a schematic diagram of a manufacturing process control system according to some embodiments.
FIG. 3B illustrates a schematic diagram of a manufacturing process control application and associated interactive voice response (IVR) menu according to some embodiments.
FIG. 4A-H are schematic diagrams illustrating an example method for manufacturing process control according to some embodiments.

### DESCRIPTION

The methods and apparatus disclosed herein provide an operative system for point of use verified aircraft assembly time collection. Specifically, this system employs a mobile telephone device associated with a user to allow the user to remotely activate and/or terminate aircraft assembly manufacturing tasks via voice control and/or via text message using the mobile telephone's keypad.

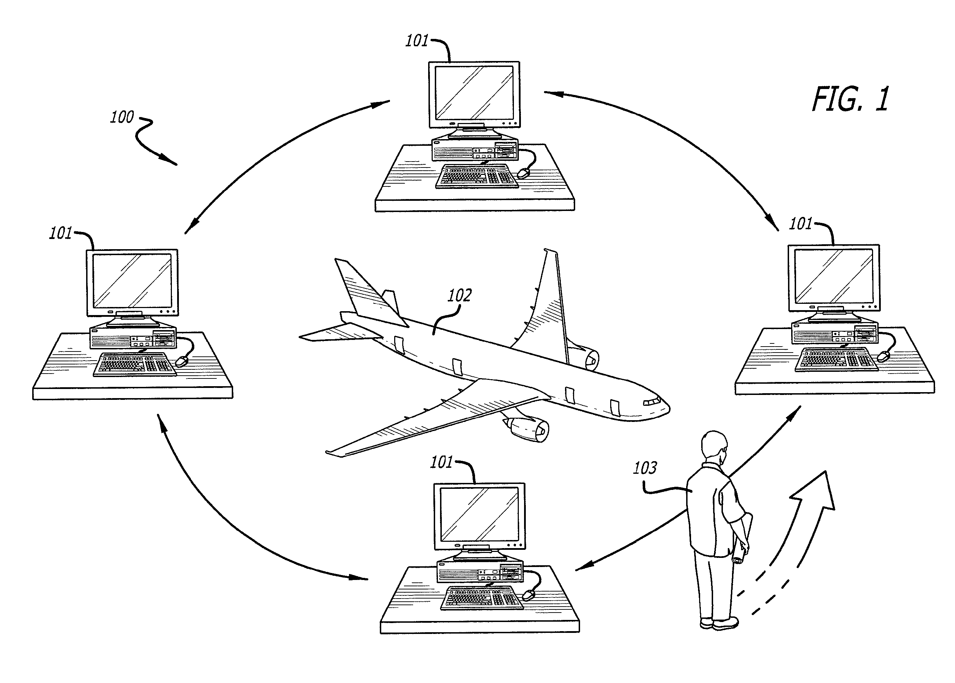

Currently, the processes available for activation/termination of aircraft assembly manufacturing tasks are quite cumbersome. FIG. 1 illustrates a schematic diagram of a typical manufacturing process control system 100. Typically, a given set of related aircraft 102 manufacturing tasks must be activated and terminated manually using a few support computers 101 running manufacturing process control applications located throughout the aircraft 102 manufacturing facility. In order to activate a particular task, an assembly technician 103 must travel to a support computer 101 before selecting the next task to be performed. Similarly, in order to terminate a particular task, an assembly technician 103 must travel to a support computer 101 to select the task to be terminated. Additionally, obtaining information (e.g., accumulated time on a manufacturing task) related to a certain task also requires an assembly technician 103 to travel to a support computer 101.

Because such manufacturing facilities are very large and comprise only a limited number of support computers 101, several inefficiencies may arise in the activation/termination of manufacturing tasks. It may take an assembly technician 103 several minutes to travel from a location in the manufacturing facility to a support computer 101 in order to activate/terminate a given manufacturing task. This may increase the total time needed to perform a set of manufacturing tasks, potentially resulting in a failure to satisfy rate requirements. Such delays can sometimes be several hours. Moreover, a manufacturing task may physically complete and a new manufacturing task may physically begin with the time accumulated for the new manufacturing task continuing to be assigned to the completed manufacturing task until an assembly technician 103 is able to reach a support computer 101 and modify the manufacturing task selected for the manufacturing process control application.

The disclosed system design allows for remote activation/termination of aircraft assembly manufacturing tasks via a mobile telephone device, thereby minimizing the delay associated with typical manufacturing process control systems. Such activation/termination of manufacturing tasks may be controlled by voice, or may alternatively be controlled by text message where the environment is not conducive to voice control. Additionally, information (e.g., accumulated time on a manufacturing task) related to a certain task may be obtained remotely using a mobile telephone device.

In the following description, numerous details are set forth in order to provide a more thorough description of the system. It will be apparent, however, to one skilled in the art, that the disclosed system may be practiced without these specific details. In the other instances, well known features have not been described in detail so as not to unnecessarily obscure the system.

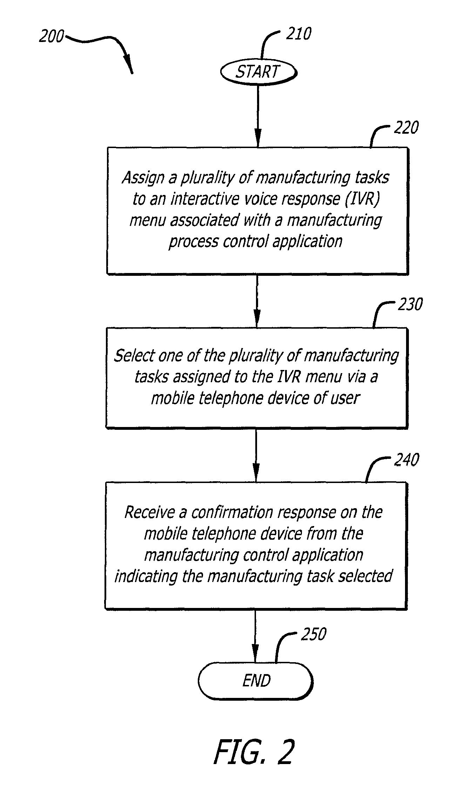

FIG. 2 illustrates a flow diagram of a method 200 of manufacturing control according to some embodiments. The method 200 begins at step 210. A plurality of manufacturing tasks are assigned to an interactive voice response (IVR) menu associated with a manufacturing process control application as described at step 220. The manufacturing process control application may run on each of the support computers located throughout the manufacturing facility. An IVR menu is associated with the manufacturing process control application, and configured to facilitate interaction between a mobile telephone device and the manufacturing process control application using voice or keypad inputs. For example, the IVR menu may interpret user voice/keypad inputs from a mobile telephone device and translate the voice/keypad input into an input for the manufacturing process control application. Likewise, the IVR menu may translate outputs from the manufacturing process control application into voice/text outputs for the mobile telephone device.

A plurality of manufacturing tasks are assigned to the IVR menu. The plurality of manufacturing tasks may be input by an assembly technician on a support computer running the manufacturing process control application and associated IVR menu prior to the commencement of a manufacturing shift. The plurality of manufacturing tasks may include a number of tasks to be performed during the upcoming manufacturing shift. Assigning the plurality of manufacturing tasks to the IVR menu involves assigning an identifier for each manufacturing task assigned. In some embodiments, each manufacturing task of the plurality of manufacturing tasks may be assigned a number. In some embodiments, the number may correspond to a key on a keypad of a mobile telephone device. In other embodiments, each manufacturing task of the plurality of manufacturing task may be assigned an identifier other than a number, such as for example, a letter.

Once the plurality of manufacturing tasks have been assigned, one of the plurality of manufacturing tasks assigned to the IVR may be selected via a mobile telephone device of a user as described at step 230. In selecting one of the plurality of manufacturing tasks, a user (e.g., assembly technician) may first dial in to a telephone number associated with the IVR menu.

In some embodiments, the method for manufacturing process control may further include a step for authenticating the user of the mobile telephone device prior to selection of the manufacturing task. Authenticating the user may comprise verifying a telephone number corresponding to the user's telephone mobile device. For example, the manufacturing control application may store a list of authorized telephone numbers that may be compared to the telephone number of the mobile device being used to interact with the IVR menu. If the telephone number of the mobile device is included in the list, the user of the mobile telephone device may go ahead and select one of the plurality of manufacturing tasks assigned to the IVR menu. If the telephone number of the mobile device is not included in the list, the user of the mobile device may be prevented from selecting one of the plurality of manufacturing tasks assigned to the IVR menu. In some other embodiments, authenticating the user may further comprise verifying a PIN entered by the user of the mobile telephone device. For example, the manufacturing control application may query the user of the mobile telephone device for a PIN, which is then compared to a list of verified personal identification numbers (PINs). If the PIN is included in the list, the user of the mobile telephone device may go ahead and select one of the plurality of manufacturing tasks assigned to the IVR menu. If the PIN is not included in the list, the user of the mobile telephone device may be prevented from selecting one of the plurality of manufacturing tasks assigned to the IVR menu.

To expedite selection of manufacturing tasks, the user may program his mobile telephone device to speed dial the telephone number associated with the IVR menu. Once the user has connected to the IVR menu (either with authentication or without authentication), the IVR menu may orally recite each manufacturing task assigned along with its assigned identifier. The user may then select a manufacturing task from the IVR menu.

In some embodiments, the user may orally recite a menu item (e.g., identifier) to the IVR menu via mobile telephone device indicating the manufacturing task to be selected. In such embodiments, the IVR menu is configured to perform speech recognition and select the manufacturing task associated with the identifier recited by the user. In other embodiments, the user may send a text message of a menu item (e.g., identifier) to the IVR menu indicating the manufacturing task to be selected. In such embodiments, the IVR menu is configured to interpret the text message and select the manufacturing task associated with the identifier written in the text message. It may be preferable to use text messaging rather than oral recitation to select manufacturing tasks when the user of the mobile device is located in a noisy environment that is not conducive to voice control.

In some embodiments, selecting one of the plurality of manufacturing tasks results in termination of a previous manufacturing task and activation of the selected manufacturing task. In some other embodiments, selecting one of the plurality of manufacturing tasks results in termination of time accumulation for a previous manufacturing task and activation of time accumulation for the selected manufacturing task. In some other embodiments, selecting one of the plurality of manufacturing tasks results in receiving information associated with the selected manufacturing task. Such information may include, for example, the current time accumulated for the selected manufacturing task or the time remaining for the selected manufacturing task.

Once a manufacturing task has been selected, a confirmation response indicating the manufacturing task selected is then received on the mobile telephone device from the manufacturing control application as described at step 240. In some embodiments, the confirmation response may be received as a text message on the user's mobile telephone device. This may be preferable when the user of the mobile device is located in a noisy environment, where it may be difficult to hear information being spoken into the mobile telephone device.

In some embodiments, receiving a confirmation response on the mobile telephone also comprises receiving information associated with the terminated previous manufacturing task. For example, the confirmation response may indicate a time accumulated for the terminated manufacturing task. In other embodiments, receiving a confirmation response on the mobile telephone comprises receiving information associated with the selected manufacturing task. For example, the confirmation response may indicate the time allocated for performing the selected manufacturing task in addition to indicating the manufacturing task selected.

The method 200 ends at step 250.

After assigning the plurality of manufacturing tasks to the IVR menu, the selection of manufacturing tasks and the receipt of the confirmation response may be repeated several times throughout the course of the manufacturing shift. For example, an assembly technician may select a first manufacturing task assigned to the IVR menu via his mobile telephone device and receive a confirmation response indicating the selected first manufacturing task. After completing the first manufacturing task, the assembly technician may then select a second manufacturing task assigned to the IVR menu via his mobile telephone device and receive a confirmation response indicating the selected second manufacturing task. This selection of manufacturing tasks and receipt of confirmation responses may be repeated several times for a single assignment of manufacturing tasks to the IVR.

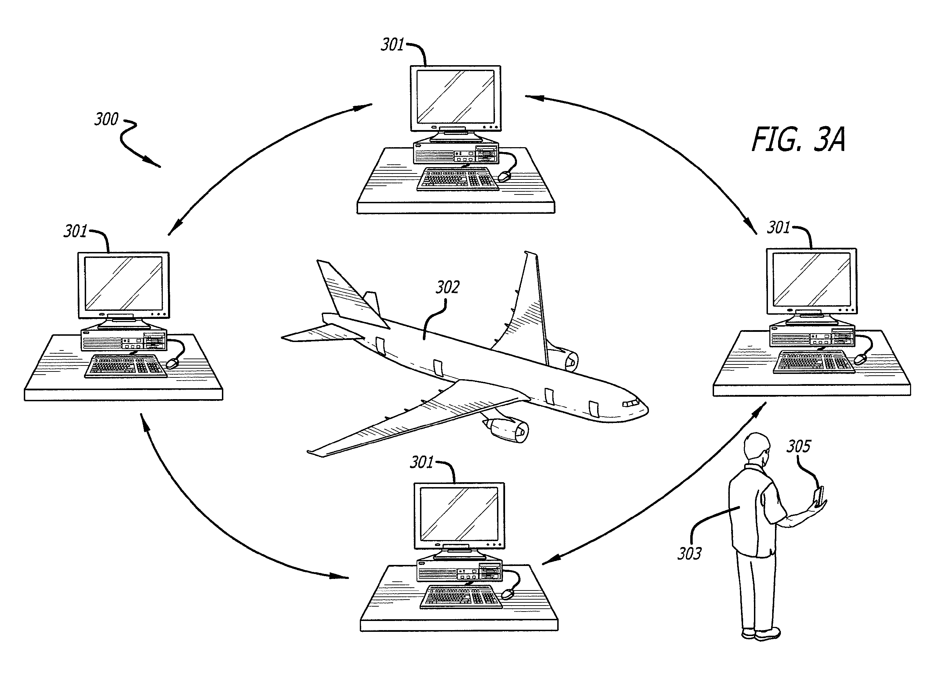

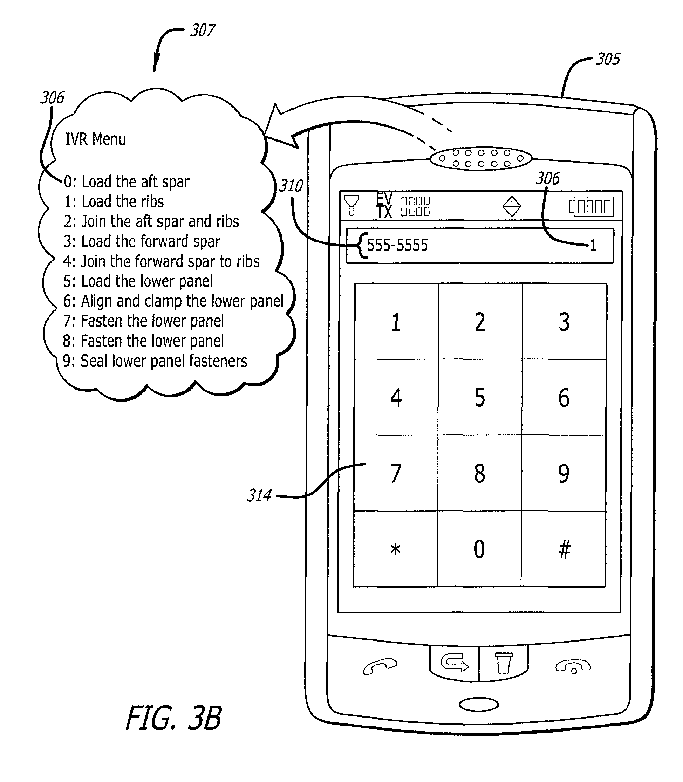

FIG. 3A illustrates a schematic diagram of a manufacturing control system 300 for implementing the method 200 of FIG. 2 according to some embodiments. The system 300 may comprise one or more support computers 301 located in an aircraft 302 manufacturing facility. Each support computer 301 may run a manufacturing control application and associated interactive voice response menu 307, as illustrated in FIG. 3B. The interactive voice response menu 307 may include a plurality of assigned manufacturing tasks 306 that may be selected via a mobile telephone device 305, as discussed above. A user 303 (e.g., assembly technician) of a mobile telephone device 305 may interact with the IVR menu 307 associated with the manufacturing control application via his mobile telephone device 305 (e.g., using voice control or text messaging) to implement the method 200 described in FIG. 2.

By allowing remote activation/termination of aircraft 302 assembly manufacturing tasks 306 via a mobile telephone device 305, the delay associated with typical manufacturing process control systems may be greatly minimized. Rather than having to physically walk to a support computer 301 to activate/terminate a manufacturing task 306 which may lead to significant delays, the proposed method and system allow a user 303 to remotely activate/terminate a manufacturing task 306 by simply using his mobile telephone device 305 to interact with the manufacturing process control application. Additionally, information (e.g., accumulated time on a manufacturing task) related to a certain task 306 may be obtained remotely using a mobile telephone device 305 rather than having to physically walk to a support computer 301 to obtain the information. Also, the proposed method and system for manufacturing process control allows for much improved accuracy in task time accumulation, as time accumulated for a given manufacturing task 306 is stopped once the mobile telephone device 305 selects the manufacturing task 306 for termination, which more accurately reflects the time accumulated at the actual physical termination of the task 306. This is in contrast to typical manufacturing process control systems, wherein time accumulated for a given manufacturing task 306 is stopped only when an assembly technician 303 is able to reach a support computer 301 to manually terminate the task 306, even if the manufacturing task 306 has already physically terminated. Furthermore, the proposed method and system for manufacturing process control completely avoids having to provide any configuration control to the mobile telephone devices 305 themselves, as the IVR menu 307 is configured to interact with any mobile telephone device 305.

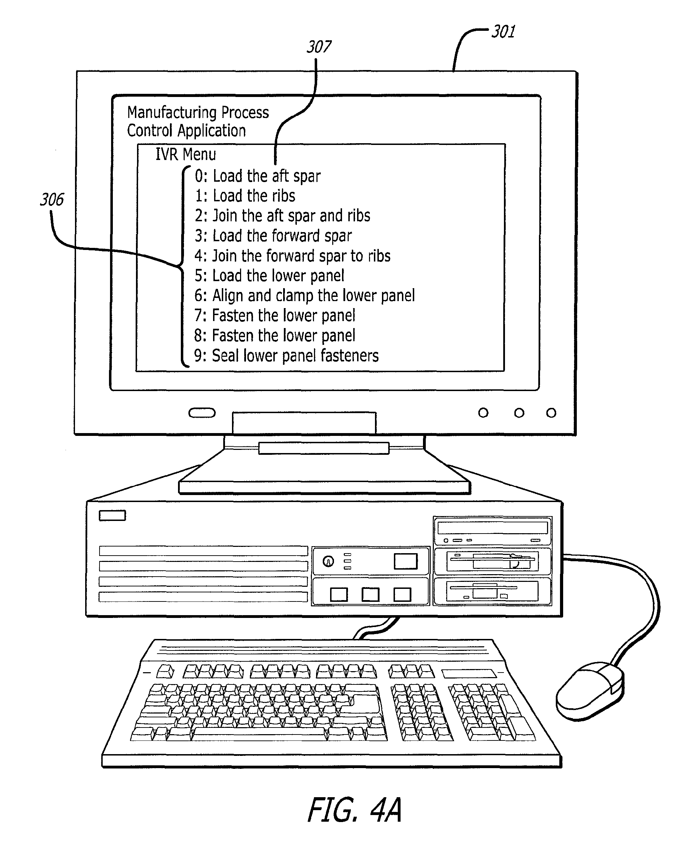

FIG. 4A-H are schematic diagrams illustrating an example method for manufacturing process control according to some embodiments. Initially, a user (e.g., assembly technician) 303 assigns a plurality of manufacturing tasks 306 to an IVR menu 307 associated with a process control application as illustrated in FIG. 4A. This may involve the user 303 physically walking over to a support computer 301 and manually inputting the plurality of manufacturing tasks 306 to the IVR menu 307. Alternatively, the user may input the plurality of manufacturing tasks 306 to the IVR menu 307 remotely, using a remote computer that has access to the IVR menu 307 associated with the manufacturing process control application. In this example, each manufacturing task 306 is assigned to a number corresponding to a key on a keypad 314 of the mobile telephone device 305. For example, the task 306 "Load aft spar" is assigned to the number "0", the task 306 "Load the ribs" is assigned to the number "1", etc.

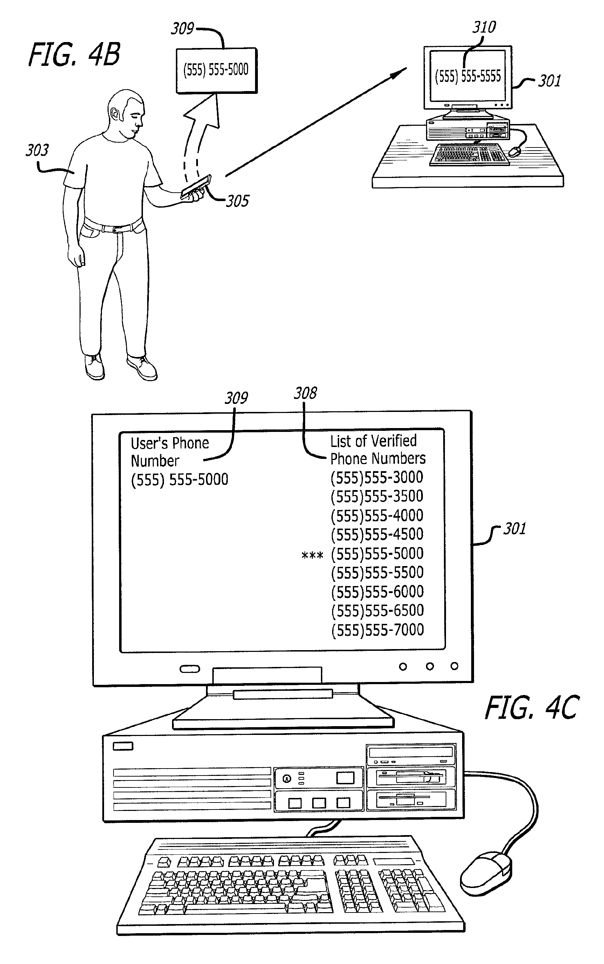

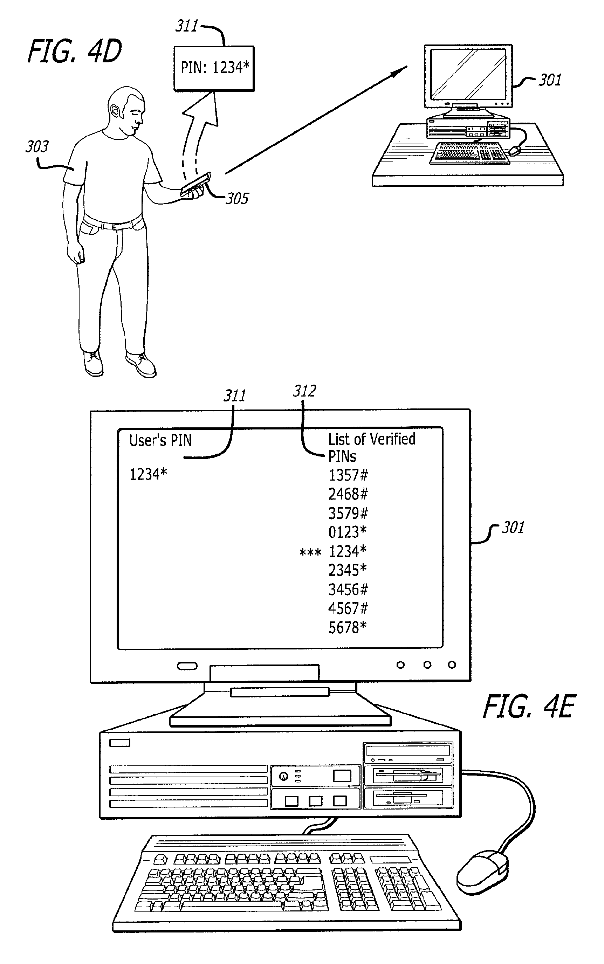

Once the plurality of manufacturing tasks 306 has been assigned to the IVR menu 307, the user 303 may dial in to a telephone number 310 associated with the IVR menu 307 using his mobile telephone device 305 as illustrated in FIG. 4B. The manufacturing control application may then verify the telephone number 309 associated with the mobile telephone device 305 by comparing the telephone number 309 with a list of authorized telephone numbers 308 as illustrated in FIG. 4C. The manufacturing control application may further authenticate the user 303 of the mobile telephone device 305 by querying the user 303 for a PIN 311. The user 303 of the mobile telephone device 305 may then enter a PIN 311 as illustrated in FIG. 4D. The manufacturing control application may then verify the PIN 311 by comparing the PIN 311 to a list of verified PINs 312 as illustrated in FIG. 4E.

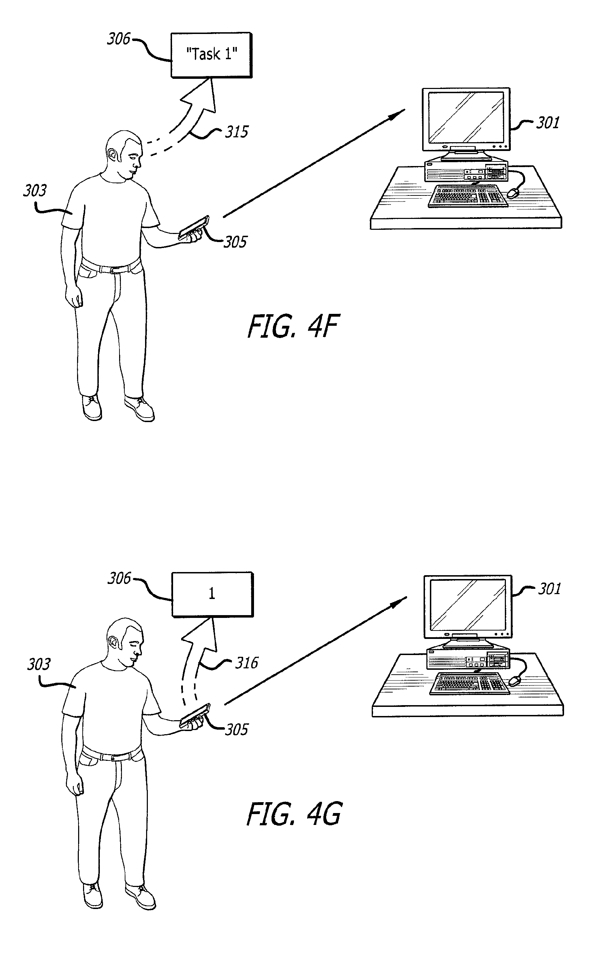

Once the user 303 of the mobile telephone device 305 has been authenticated, the IVR menu 307 may orally recite each manufacturing task assigned along with its assigned identifier (e.g., number) 306. The user 303 may then select one of the plurality of manufacturing tasks 306 assigned to the IVR menu 307 via his mobile telephone device 305. The user 303 may orally recite 315 the menu item 306 indicating the task to be selected as illustrated in FIG. 4F. Alternatively, the user may send a text message 316 indicating the manufacturing task 306 to be selected as illustrated in FIG. 4G.

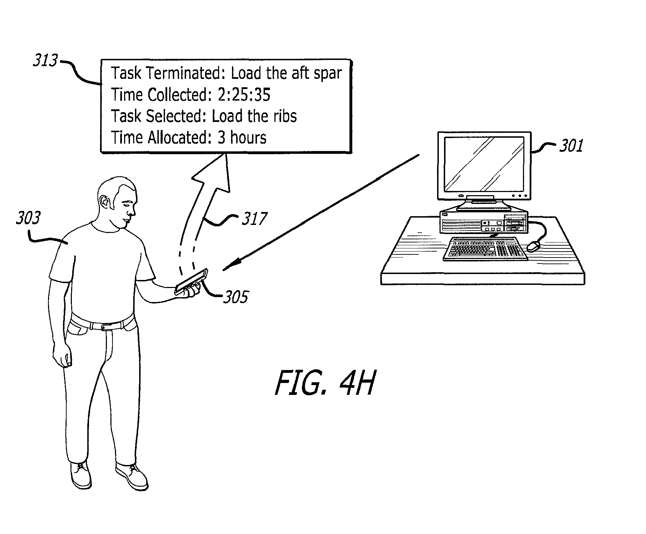

The manufacturing process control application then sends a confirmation response 313 in a text message 317 to the mobile telephone device 305 of the user 303 as illustrated in FIG. 4H. In this example, the confirmation response 313 indicates the manufacturing task 306 terminated, the time collected for the terminated manufacturing task 306, the manufacturing task 306 selected, and the time allocated for the selected manufacturing task 306.

Although certain illustrative embodiments and methods have been disclosed herein, it can be apparent from the foregoing disclosure to those skilled in the art that variations and modifications of such embodiments and methods can be made without departing from the true spirit and scope of the art disclosed. Many other examples of the art disclosed exist, each differing from others in matters of detail only. Accordingly, it is intended that the art disclosed shall be limited only to the extent required by the appended claims and the rules and principles of applicable law.

## Claims

1. A method (200) for manufacturing process control, comprising:
assigning a plurality of manufacturing tasks (306) to an interactive voice response (IVR) menu (307) associated with a manufacturing process control application;
selecting one of the plurality of manufacturing tasks (306) assigned to the interactive voice response menu (307) via a mobile telephone device (305) of a user (303); and
receiving a confirmation response (313) on the mobile telephone device (305) from the manufacturing process control application indicating the manufacturing task (306) selected.

2. The method (200) of claim 1, wherein assigning the plurality of manufacturing tasks (306) involves assigning each manufacturing task (306) to a number, the number corresponding to a key (314) on a keypad of the mobile telephone device (305).

3. The method (200) of claim 1, wherein selecting one of the plurality of manufacturing tasks (306) comprises sending a text message (316) to the interactive voice response menu (307) indicating the manufacturing task (306) to be selected.

4. The method (200) of claim 1, wherein selecting one of the plurality of manufacturing tasks (306) comprises orally reciting (315) a menu item to the interactive voice response menu (307) indicating the manufacturing task (306) to be selected by the user (303).

5. The method (200) of claim 1, wherein:
selecting one of the plurality of manufacturing tasks (306) results in termination of a previous manufacturing task (306) and activation of the selected manufacturing task (306); and.
receiving a confirmation response (313) on the mobile telephone (305) comprises receiving information associated with one of the terminated previous manufacturing task (306) and the selected manufacturing task (306).

6. The method (200) of claim 1, further comprising authenticating the user (303) of the mobile telephone device (305) prior to selecting one of the plurality of manufacturing tasks (306), wherein the authenticating includes one or both of verifying a telephone number (309) corresponding to the user's mobile telephone device (305) and verifying a PIN (311) entered by the user (303) that is associated with a telephone number (309) corresponding to the user's mobile telephone device (305).

7. A system (300) for manufacturing process control, comprising:
an interactive voice response (IVR) menu (307)associated with a manufacturing process control application; and
a mobile telephone device (305) of a user (303);
wherein:
a plurality of manufacturing tasks (306) are assigned to the interactive voice
response (IVR) menu (307) associated with the manufacturing process control application,
one of the plurality of manufacturing tasks (306) assigned to the interactive voice response menu (307) is selected via a mobile telephone device (305) of a user (303), and
a confirmation response (313) is received on the mobile telephone device (305) from the manufacturing process control application indicating the manufacturing task (306) selected.

8. The system (300) of claim 7, wherein assigning the plurality of manufacturing tasks (306) involves assigning each manufacturing task (306) to a number, the number corresponding to a key on a keypad (314) of the mobile telephone device (305).

9. The system (300) of claim 7, wherein selecting one of the plurality of manufacturing tasks (306) comprises one of sending a text message (317) to the interactive voice response menu (307) indicating the manufacturing task (306) to be selected and orally reciting (315) a menu item to the interactive voice response menu (307) indicating the manufacturing task (306) to be selected by the user (303).

10. The system (300) of claim 7, wherein selecting one of the plurality of manufacturing tasks (306) results in termination of a previous manufacturing task (306) and activation of the selected manufacturing task (306).
